# FASCICULE DE BREVET EUROPEEN

(11) **EP 1 451 047 B1**
(45) Date de publication et mention de la délivrance du brevet: **02.01.2008**
(21) Numéro de dépôt: 02799778.2
(22) Date de dépôt: 04.12.2002
(51) Int. Cl.: B60S 1/04

(54) **AGENCEMENT POUR LA FIXATION D'UN DISPOSITIF D'ESSUYAGE PERMETTANT L'EFFACEMENT DE L'ARBRE D'ENTRAINEMENT EN CAS DE CHOC**
ANORDNUNG ZUR BEFESTIGUNG EINER WISCHERVORRICHTUNG, DIE ZUM EINZIEHEN DER ANTRIEBSWELLE BEI EINEM AUFPRALL VERWENDET WERDEN KANN
ARRANGEMENT FOR FIXING A WIPER DEVICE WHICH CAN BE USED TO RETRACT THE DRIVE SHAFT IN THE EVENT OF AN IMPACT

(30) Priorité: 07.12.2001 FR 0115886
(43) Date de publication de la demande: 01.09.2004
(73) Titulaire: VALEO SYSTEMES D'ESSUYAGE, 78321 La Verrière (FR)
(72) Inventeur: MORIN, Pascal, F-86100 Chatellerault (FR); PRINCET, Joel, F-86100 Chatellerault (FR)
(86) Numéro de dépôt international: PCT/FR2002/004186
(87) Numéro de publication internationale: WO 2003/047926

(56) Documents cités:
- US-A- 5 441 227
- US-B1- 6 216 309

## Description

L'invention concerne un agencement pour la fixation d'un dispositif d'essuyage pour véhicule automobile.

L'invention concerne plus particulièrement un agencement pour la fixation d'un dispositif d'essuyage pour véhicule automobile, du type comportant au moins une platine de guidage en rotation et de fixation d'un arbre d'entraînement qui s'étend axialement suivant une direction sensiblement verticale, du type dans lequel la platine comporte un fût dans lequel l'arbre est guidé en rotation, et une semelle horizontale pour la fixation de la platine avec un élément de structure de caisse du véhicule, par l'intermédiaire d'un bloc amortisseur en matériau déformable élastiquement, du type dans lequel le bloc amortisseur est fixé à l'élément de structure de caisse par un élément de fixation comportant une tige verticale qui traverse le bloc amortisseur et qui est reliée à l'élément de structure de caisse, et un élément de blocage vertical du bloc amortisseur en position fixée sur l'élément de structure de caisse.

Une telle platine constitue un mécanisme classique de fixation du dispositif d'essuyage sur la caisse du véhicule, voir US-A-6 216 309 (figures 4 et 5).

En cas de collision du véhicule avec un piéton, la partie du mécanisme d'essuie-glace qui s'étend à l'extérieur du véhicule constitue un objet contondant qui risque de provoquer des blessures.

On a aussi remarqué que, en cas d'accident violent, le dispositif d'essuyage, qui est agencé dans le compartiment moteur à proximité de l'habitacle, pouvait pénétrer à l'intérieur de l'habitacle par la baie de pare-brise sous l'effet du choc.

L'intrusion accidentelle d'un élément aussi massif se révèle alors dangereux pour la sécurité des passagers et il est donc apparu nécessaire de mieux prévoir le comportement du dispositif d'essuyage en cas de choc violent.

On connaît l'existence de moyens permettant un effacement de la platine, notamment dans le document FR-A-2.733.474, dans lequel la platine comporte une zone d'amorce de rupture, et dans le document EP-A-0.916.559, dans lequel l'arbre d'entraînement s'efface axialement dans le fût de guidage.

Cependant, ces solutions font appel à des pièces de formes complexes ou à des pièces supplémentaires. Il n'est alors plus possible d'utiliser de pièces standard et il en résulte un surcoût lors de la fabrication.

L'invention a pour but de proposer une platine permettant un effacement de l'arbre d'entraînement en cas de choc axial, qui utilise des pièces standard.

Dans ce but, l'invention propose un agencement du type décrit précédemment, caractérisé en ce que la tige et l'élément de blocage sont reliés par des moyens de liaison permettant une désolidarisation de la tige et de l'élément de blocage, par un coulissement sensiblement vertical vers le bas de l'élément de blocage par rapport à la tige, lorsque le dispositif d'essuyage est soumis à un impact violent dont la composante verticale est orientée vers le bas et est supérieure à une valeur déterminée, en permettant ainsi une séparation par un coulissement vertical vers le bas du bloc amortisseur d'avec l'élément de structure de caisse, pour obtenir un effacement axial de la semelle, du fût de guidage et de l'arbre d'entraînement.

Selon d'autres caractéristiques de l'invention :
- les moyens de liaison comportent au moins un élément déformable élastiquement ;
- les moyens de liaison comportent au moins un élément de retenue de l'élément de blocage qui est rapporté à la tige et qui est apte à se désolidariser d'avec la tige lors de l'impact ;
- les moyens de liaison comportent au moins deux pattes aptes à se déformer radialement vers l'extérieur reçues par l'extrémité inférieure de l'élément de blocage, et dont les faces intérieures sensiblement verticales coopèrent avec la paroi de la tige pour la liaison de l'élément de blocage avec la tige ;
- les moyens de liaison comportent au moins un élément déformable plastiquement ;
- la tige comporte, au voisinage de son extrémité inférieure, au moins une patte recourbée vers l'extérieur qui est en appui contre une face inférieure de l'élément de blocage ;
- l'élément de blocage comporte une douille tubulaire et/ou cylindrique s'étendant sensiblement verticalement qui est traversée par la tige, la paroi intérieure de la douille tubulaire et la paroi extérieure de la tige étant reliées par coopération de formes complémentaires ;
- les moyens de liaison comportent au moins une zone d'amorce de rupture ;
- l'élément de blocage et la tige sont deux parties d'un même élément de fixation, et la tige est reliée à l'élément de blocage par la zone d'amorce de rupture ;
- l'élément de blocage est relié à la tige par un élément intermédiaire, et l'élément de blocage est relié à l'élément intermédiaire par la zone d'amorce de rupture.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'une partie du dispositif d'essuyage conforme aux enseignements de l'invention ;
- la figure 2 est une vue en perspective d'une tige de l'élément de fixation du dispositif d'essuyage conforme aux enseignements de l'invention ;
- la figure 3 est une vue en section axiale longitudinale du dispositif d'essuyage de la figure 1 par un plan passant par les axes verticaux de l'arbre et du bloc amortisseur ;
- la figure 4 en une vue similaire à celle de la figure 3 sur laquelle la platine de guidage et l'arbre d'entraînement sont représentés effacés après un choc ;
- la figure 5 représente, en section longitudinale axiale et à plus grande échelle la réalisation détaillée du bloc amortisseur et de l'élément de fixation conformes à l'invention; et
- les figures 6, 7 et 8 sont des vues représentant trois autres modes de réalisation de l'élément de fixation, conformes à l'invention.

Dans la description qui va suivre, des éléments identiques, similaires ou analogues seront désignés par les mêmes chiffres de référence.

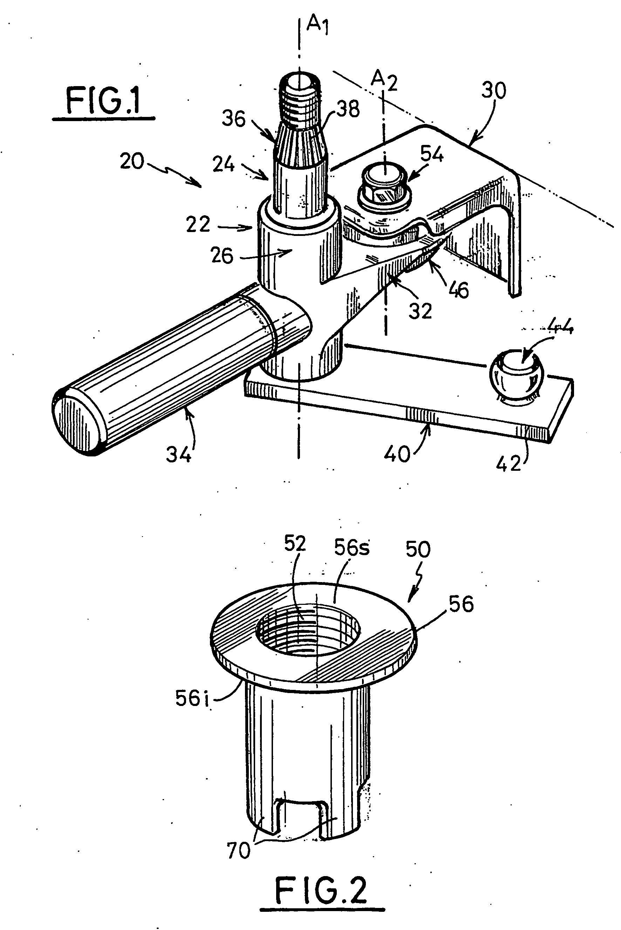

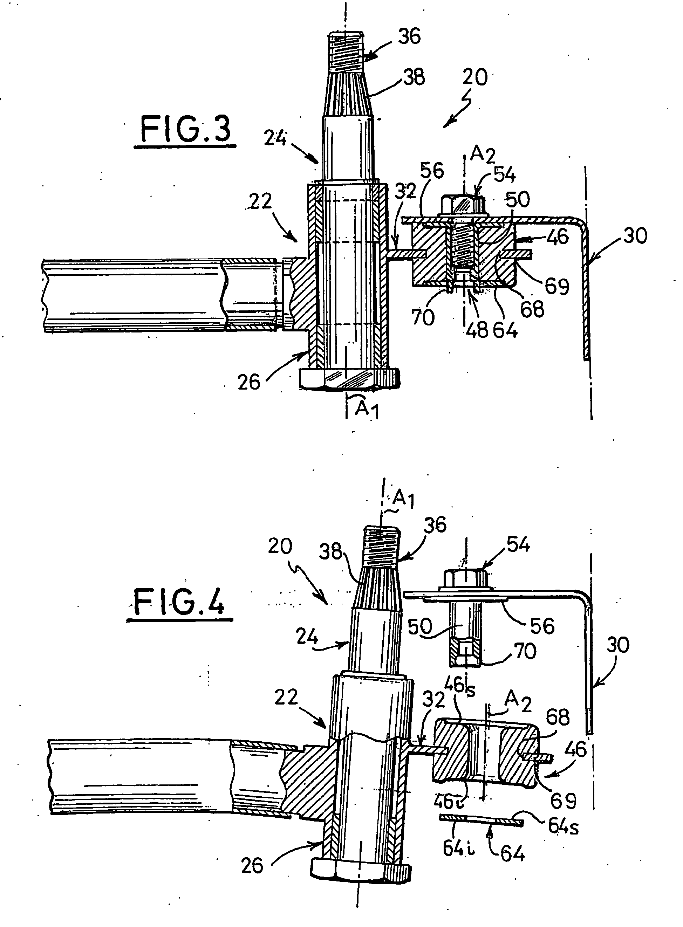

On a représenté aux figures 1, 2 et 3 un dispositif d'essuyage 20 d'une vitre d'un véhicule automobile (non représentée) qui comporte une platine 22, et un arbre 24 d'entraînement d'un balai d'essuie-glace (non représenté).

La platine 22 permet le guidage en rotation et la fixation de l'arbre 24. Elle comporte un fût 26 tubulaire d'axe A1 vertical qui est prévu pour recevoir à rotation autour de son axe A1, l'arbre 24.

A titre non limitatif, l'axe A1 est ici orienté verticalement.

Pour sa fixation sur un élément de structure de caisse 30 du véhicule, la platine 22 comporte une semelle 32 qui s'étend sensiblement horizontalement depuis le fût 26, c'est-à-dire dans un plan perpendiculaire à l'axe A1.

La platine 22 comporte aussi un moignon 34 qui s'étend horizontalement depuis le fût 26 et qui sert à la liaison de la platine 22 avec le système d'entraînement (non représenté) du dispositif d'essuyage 20.

L'extrémité supérieure 36 de l'arbre 24 dépasse axialement vers l'extérieur au-delà de l'extrémité supérieure du fût 26 de manière à permettre le montage de l'essuie-glace sur une surface de portée conique 38, en l'occurrence crantée, contre laquelle l'essuie-glace est destiné à être serré axialement par un écrou (non représenté) vissé sur la portion filetée d'extrémité supérieure libre 36 de l'arbre 24.

Pour permettre l'entraînement en rotation de l'arbre 24, il est prévu une manivelle 40 qui est montée solidaire en rotation de l'extrémité inférieure de l'arbre 24, sensiblement perpendiculaire à l'axe A1 du fût 26.

Pour sa liaison avec une tringlerie de commande (non représentée), elle-même entraînée par un motoréducteur (non représenté), la manivelle 40 comporte, à son extrémité longitudinale libre 42 opposée à son extrémité de fixation sur l'arbre 24, une rotule sphérique 44 qui est destinée à être reçue dans un logement de forme complémentaire (non représenté) porté par la tringlerie.

Selon une conception générale connue, afin notamment d'amortir les vibrations, la semelle 32 est fixée sur l'élément de structure de caisse 30 par l'intermédiaire d'un bloc amortisseur 46 qui est par exemple un bloc de forme générale cylindrique en matériau élastomère.

Le bloc amortisseur 46 s'étend selon un axe vertical A2 sensiblement parallèle à l'axe A1 de l'arbre 24.

Il est connu de réaliser le bloc 46 sous la forme d'un élément en matériau élastomère surmoulé autour d'un élément central de fixation 48. L'élément de fixation 48 comporte une tige 50 tubulaire de section annulaire qui traverse axialement le bloc amortisseur 46.

La tige 50 tubulaire comporte un taraudage supérieur 52 qui reçoit une vis 54 de fixation de la tige 50 sur l'élément de structure de caisse 30. La tige 50 comporte aussi une collerette supérieure horizontale 56 dont la face inférieure 56i est en appui contre une face supérieure 46s du bloc 46 et dont la face supérieure 56s est en appui sur une face inférieure de l'élément de structure de caisse 30, sous l'action de serrage de la vis 54.

L'élément de fixation 48 comporte aussi un élément de blocage 64 qui permet de solidariser le bloc 46 avec l'élément de fixation 48. L'élément de blocage 64 est en général une rondelle horizontale dont la face supérieure 64s est en appui contre une face inférieure 46i du bloc 46, et qui est reliée à la tige 50 par des moyens de liaison.

Ainsi, le bloc 46 est fixé verticalement entre la collerette 56 de la tige 50, et l'élément de blocage 64, le montage axial étant de préférence serré.

Le bloc 46 est monté dans un logement complémentaire 68 de la semelle 32. Plus précisément, le logement 68 est un trou de contour circulaire dont les dimensions correspondent à celles d'une gorge 69 formée dans la paroi cylindrique latérale du bloc amortisseur 46.

Conformément aux enseignements de l'invention, les moyens de liaison entre l'élément de blocage 64 et la tige 50 permettent une désolidarisation de l'élément de blocage 64 et de la tige 50 en cas d'un impact violent, notamment en cas de collision avec un piéton. Cette désolidarisation permet ainsi au bloc 46 de coulisser verticalement vers le bas par rapport à la tige 50. Ainsi, le bloc 46 peut se désolidariser d'avec l'élément de fixation 48, ce qui permet d'obtenir un effacement axial de la semelle 32, du fût 26 et de l'arbre d'entraînement 24.

Cependant, la désolidarisation n'est possible que pour un choc orienté vers le bas, c'est-à-dire qui comporte une composante verticale orientée vers le bas.

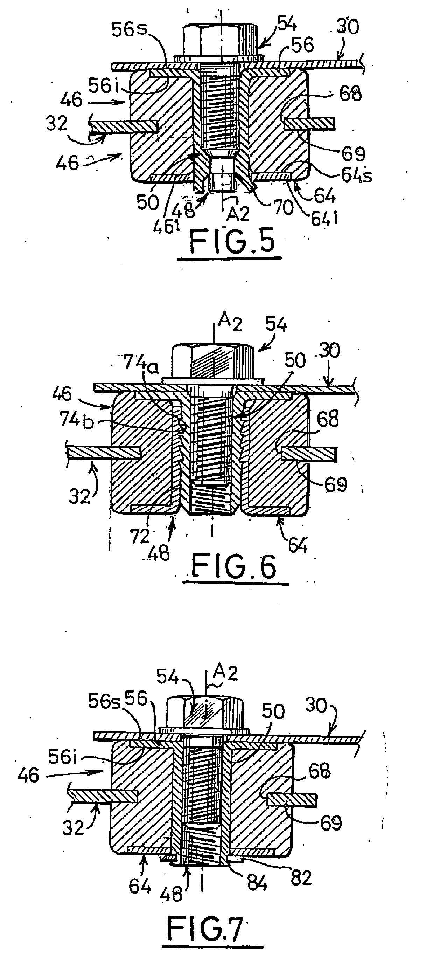

Selon un premier mode de réalisation de l'invention représenté aux figures 2 à 5, l'extrémité inférieure de la tige 50 comporte des pattes 70 qui sont recourbées radialement vers l'extérieur et serties de sorte à être en appui contre la face inférieure 64i de l'élément de blocage 64 (figure 5), formant ainsi les moyens de liaison.

Les pattes 70 sont dimensionnées de sorte que, en cas d'un impact violent, elles se déforment plastiquement et/ou se brisent), pour venir dans le prolongement axial de la tige 50. Ainsi, les pattes 70 ne retiennent plus l'élément de blocage 64 qui peut alors se désolidariser de la tige 50.

On a représenté à la figure 6 un autre mode de réalisation de l'invention selon lequel les moyens de liaison se déforment plastiquement lors de l'impact.

L'élément de blocage 64 comporte une douille tubulaire 72 qui s'étend verticalement vers le haut en traversant le bloc 46, et qui est traversée par la tige 50. Les moyens de liaison entre la tige 50 et l'élément de blocage 64 sont des formes en relief 74a agencées sur la face externe convexe de la tige 50 qui coopèrent avec des formes complémentaires 74b de la face intérieure de la douille tubulaire 72.

Ici, les formes en relief complémentaires 74a, 74b sont en formes de cames annulaires superposées. Elles peuvent cependant être de toute autre forme comme un moletage de la paroi périphérique de la tige 50, ou bien un ensemble filetage taraudage d'une liaison vis-écrou, dont un élément est en matériau plus malléable que l'autre.

Pour permettre la désolidarisation de l'élément de blocage 64, les dimensions et les matériaux constitutifs des formes complémentaires 74a, 74b sont choisis de sorte à se déformer lors de l'impact. La douille tubulaire 72, et donc l'élément de blocage 64, peut alors coulisser le long de la tige 50, jusqu'à désolidarisation complète.

On a représenté à la figure 7 un mode de réalisation de l'invention dans lequel les moyens de liaison sont déformables élastiquement.

Selon le mode de réalisation représenté à la figure 7, les moyens de liaison sont constitués par un élément rapporté 82 sur la tige 50.

Cet élément rapporté 82 est ici un anneau élastique fendu 82 qui est reçu dans une gorge 84 complémentaire de la tige 50. Cet anneau 82 permet d'arrêter en coulissement vertical vers le bas l'élément de blocage 64.

On a représenté un anneau élastique 82 du type "circlips". Cependant, il peut être remplacé par tout élément annulaire élastique comme par exemple un anneau à arc-boutement du type "GRIFAXE", ou par un jonc.

Les dimensions et le matériau de l'anneau 82, ainsi que la profondeur de la gorge 84, sont déterminés de sorte que l'anneau 82 puisse sortir de la gorge 84 lors de l'impact, permettant ainsi la désolidarisation de l'élément de blocage 64.

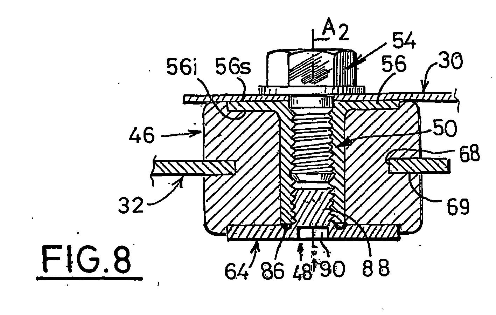

Selon une autre variante de l'invention représentée à la figure 8, les moyens de fixation comportent une zone d'amorce de rupture 86.

Selon le mode de réalisation représenté à la figure 8, l'élément de blocage 64 comporte un élément fileté 88 qui s'étend verticalement vers le haut et dont le filetage coopère avec le taraudage de la tige 50 pour réaliser la fixation de l'élément de blocage 64.

L'élément fileté est relié à la partie horizontale de l'élément de blocage 64 par la zone d'amorce de rupture 86.

La section de la zone d'amorce de rupture 86 est dimensionnée de sorte à se rompre lors de l'impact. De ce fait, la partie horizontale de l'élément de blocage 64 et l'élément fileté 88 se désolidarisent, l'élément fileté restant vissé dans la tige 50, et permettant ainsi la désolidarisation de l'élément de blocage 64.

Pour permettre le vissage initial de l'élément de blocage 64 dans la tige 50, ainsi que le démontage de l'élément fileté 88 après rupture, l'élément de blocage 64 comporte une forme 90 type "hexagonale". Cette forme 90 permet de manoeuvrer l'élément de blocage 64 et l'élément fileté 88 à l'aide d'une clé complémentaire de vissage (non représentée).

L'invention permet donc la fixation d'un dispositif d'essuyage 20 sur un élément de structure de caisse 30 qui permette une séparation de ces éléments lors d'un choc. De plus cette fixation est composée d'un grand nombre d'éléments standards, ce qui permet d'en réduire le coût de fabrication.

## Revendications

1. Agencement pour la fixation d'un dispositif d'essuyage (20) pour véhicule automobile, du type comportant au moins une platine (22) de guidage en rotation et de fixation d'un arbre d'entraînement (24) qui s'étend axialement suivant une direction sensiblement verticale (A1), du type dans lequel la platine (22) comporte un fût (26) dans lequel l'arbre (24) est guidé en rotation, et une semelle (32) horizontale pour la fixation de la platine (22) avec un élément de structure de caisse (30) du véhicule, par l'intermédiaire d'un bloc amortisseur (46) en matériau déformable élastiquement, du type dans lequel le bloc amortisseur (46) est apte à être fixé à l'élément de structure de caisse (30) par un élément de fixation (48) comportant une tige (50) verticale qui traverse le bloc amortisseur (46) et qui est reliée à l'élément de structure de caisse (30), et un élément de blocage (64) du bloc amortisseur (46) en position fixée sur l'élément de structure de caisse (30),
**caractérisé en ce que** la tige (50) et l'élément de blocage (64) sont reliés par des moyens de liaison permettant une désolidarisation de la tige (50) et de l'élément de blocage (64), par un coulissement sensiblement vertical vers le bas de l'élément de blocage (64) pat rapport à la tige (50), lorsque le dispositif d'essuyage (20) est soumis à un impact violent dont la composante verticale est orientée vers le bas et est supérieure à une valeur déterminée.

2. Agencement selon la revendication précédente, **caractérisé en ce que** les moyens de liaison comportent au moins un élément déformable élastiquement (82).

3. Agencement selon la revendication précédente, **caractérisé en ce que** les moyens de liaison comportent au moins un élément de retenue (82) de l'élément de blocage qui est rapporté sur la tige et qui est apte à se désolidariser d'avec la tige (50) lors de l'impact.

4. Agencement selon la revendication 2, **caractérisé en ce que** les moyens de liaison comportent au moins deux pattes, aptes à s'écarter radialement vers l'extérieur, reçues par l'extrémité inférieure de l'élément de blocage, et dont les faces intérieures sensiblement verticales coopèrent avec la paroi extérieure de la tige pour la liaison de l'élément de blocage avec la tige.

5. Agencement selon la revendication 1, **caractérisé en ce que** les moyens de liaison comportent au moins un élément déformable plastiquement (70, 74a, 74b).

6. Agencement selon la revendication précédente, **caractérisé en ce que** la tige (50) comporte, au voisinage de son extrémité inférieure, au moins une patte (70) recourbée vers l'extérieur qui est en appui contre une face inférieure de l'élément de blocage (64).

7. Agencement selon la revendication 5, **caractérisé en ce que** l'élément de blocage (64) comporte une douille tubulaire (72) et/ou cylindrique s'étendant sensiblement verticalement qui est traversée par la tige (50), la paroi intérieure de la douille tubulaire (72) et la paroi extérieure de la tige (50) étant reliées par coopération de formes complémentaires (74a, 74b).

8. Agencement selon la revendication 1, **caractérisé en ce que** les moyens de liaison comportent au moins une zone d'amorce de rupture (86).

9. Agencement selon la revendication précédente, **caractérisé en ce que** l'élément de blocage (64) et la tige (50) sont deux parties d'un même élément de fixation (48), et **en ce que** la tige (50) est reliée à l'élément de blocage (64) par la zone d'amorce de rupture (86).

10. Agencement selon la revendication 8, **caractérisé en ce que** l'élément de blocage (64) est relié à la tige (50) par un élément intermédiaire (88), et **en ce que** l'élément de blocage (64) est relié à l'élément intermédiaire (88) par la zone d'amorce de rupture (86).

## Claims

1. An arrangement for fastening a wiper device (20) for a motor vehicle, the wiper device being of the type comprising at least one support (22) for guiding a drive shaft (24) in rotation and for fastening it, said drive shaft extending axially in a substantially vertical direction (A1), said wiper device being of the type in which the support (22) has a sleeve (26) in which the shaft (24) is guided in rotation, and a horizontal plate (32) for fastening the support (22) to a structural body element (30) of the vehicle, via a damper block (46) made of an elastically deformable material, and said wiper device being of the type in which the damper block (46) is suitable for being fastened to the structural body element (30) via a fastening element (48) comprising a vertical bushing (50) that passes through the damper block (46) and that is connected to the structural body element (30), and a locking element (64) for locking the damper block (46) in position as fastened to the structural body element (30);
said arrangement being **characterized in that** the bushing (50) and the locking element (64) are coupled together by coupling means enabling the bushing (50) and the locking element (64) to be uncoupled from each other by the locking element (64) sliding substantially vertically downwards relative to the bushing (50), when the wiper device (20) is subjected to a violent impact whose vertical component is a downward component and is greater than a determined value.

2. An arrangement according to the preceding claim, **characterized in that** the coupling means comprise at least one elastically deformable element (82).

3. An arrangement according to the preceding claim, **characterized in that** the coupling means comprise at least one retaining element (82) for retaining the locking element which is a separate element mounted on the bushing and which is suitable for uncoupling from the bushing (50) when an impact occurs.

4. An arrangement according to claim 2, **characterized in that** the coupling means comprise at least two tabs that are suitable for moving apart radially outwards, that are received by the bottom end of the locking element, and whose substantially vertical inside faces co-operate with the outside wall of the bushing for coupling the locking element to the bushing.

5. An arrangement according to claim 1, **characterized in that** the coupling means comprise at least one plastically deformable element (70, 74a, 74b).

6. An arrangement according to the preceding claim, **characterized in that**, in the vicinity of its bottom end, the bushing (50) is provided with at least one tab (70) that is curved back outwards and that bears against a bottom face of the locking element (64).

7. An arrangement according to claim 5, **characterized in that** the locking element (64) comprises a tubular and/or cylindrical bush (72) that extends substantially vertically and through which the bushing (50) passes, the inside wall of the tubular bush (72) and the outside wall of the bushing (50) being coupled together by co-operation between complementary shapes (74a, 74b).

8. An arrangement according to claim 1, **characterized in that** the coupling means are provided with at least one pre-break score zone (86).

9. An arrangement according to the preceding claim, **characterized in that** the locking element (64) and the bushing (50) are two portions of the same fastening element (48), and **in that** the bushing (50) is coupled to the locking element (64) via the pre-break score zone (86).

10. An arrangement according to claim 8, **characterized in that** the locking element (64) is coupled to the bushing (50) via an intermediate element (88), and **in that** the locking element (64) is coupled to the intermediate element (88) via the pre-break score zone (86).

## Patentansprüche

1. Anordnung für die Befestigung einer Wischvorrichtung (20) für ein Kraftfahrzeug, mit mindestens einer Platine (22) für die Rotationsführung und für die Befestigung einer Antriebswelle (24), die sich axial gemäß einer etwa vertikalen Richtung (A1) erstreckt, wobei die Platine (22) einen Schaft (26) aufweist, in dem die Welle (24) drehbar geführt ist, sowie eine horizontale Sohle (32) für die Befestigung der Platine (22) mit einem Strukturelement der Karosserie (30) des Fahrzeugs über einen Dämpfungsblock (46) aus elastisch verformbarem Material, wobei der Dämpfungsblock (46) am Strukturelement der Karosserie (30) über ein Befestigungselement (48) mit einem vertikalen Stift (50) befestigt werden kann, der den Dämpfungsblock (46) durchquert und mit dem das Strukturelement der Karosserie (30) verbunden ist, und über ein Element (64) zum vertikalen Arretieren des Dämpfungsblocks (46) in am Strukturelement der Karosserie (30) befestigter Position, **dadurch gekennzeichnet, dass** der Stift (50) und das Arretierelement (64) anhand von Verbindungsmitteln verbunden sind, die ein Trennen des Stifts (50) und des Arretierelements (64) ermöglichen, indem das Arretierelement (64) in Bezug auf den Stift (50) etwa vertikal nach unten gleitet, wenn die Wischvorrichtung (20) einem heftigen Prall ausgesetzt ist, dessen vertikale Komponente nach unten gerichtet und größer ist als ein bestimmter Wert.

2. Anordnung gemäß dem vorangehenden Anspruch, **dadurch gekennzeichnet, dass** die Verbindungsmittel mindestens ein elastisch verformbares Element umfassen.

3. Anordnung gemäß dem vorangehenden Anspruch, **dadurch gekennzeichnet, dass** die Verbindungsmittel mindestens ein Rückhaltelement (82) des Arretierelements umfassen, das an dem Stift angebracht ist und sich bei einem Zusammenprall von dem Stift (50) trennen kann.

4. Anordnung gemäß Anspruch 2, **dadurch gekennzeichnet, dass** die Verbindungsmittel mindestens zwei Laschen umfassen, die sich radial nach außen verformen können, von dem unteren Ende des Arretierelements aufgenommen werden und deren etwa vertikale Innenflächen mit der Außenwand des Stifts zusammenwirken, um das Arretierelement mit dem Stift zu verbinden.

5. Anordnung gemäß Anspruch 1, **dadurch gekennzeichnet, dass** die Verbindungsmittel mindestens ein plastisch verformbares Element (70, 74a, 74b) umfassen.

6. Anordnung gemäß Anspruch 1, **dadurch gekennzeichnet, dass** der Stift (50), in der Nähe seines unteren Endes, mindestens eine nach außen gebogene Lasche (70) umfasst, die sich gegen eine untere Fläche des Arretierelements abstützt.

7. Anordnung gemäß Anspruch 5, **dadurch gekennzeichnet, dass** das Arretierelement (64) eine rohrförmige und/oder zylindrische Hülse (72) umfasst, die sich etwa vertikal erstreckt und von dem Stift (50) durchquert wird, wobei die Innenwand der rohrförmigen Hülse (72) und die Außenwand des Stifts (50) formschlüssig (74a, 74b) zusammenwirken.

8. Anordnung gemäß Anspruch 1, **dadurch gekennzeichnet, dass** die Verbindungsmittel mindestens einen Anrissbereich (86) umfassen.

9. Anordnung gemäß dem vorangehenden Anspruch, **dadurch gekennzeichnet, dass** das Arretierelement (64) und der Stift (50) zwei Teile eines selben Befestigungselements (48) sind, und dass der Stift (50) über den Anrissbereich (86) mit dem Arretierelement (64) verbunden ist.

10. Anordnung gemäß Anspruch 8, **dadurch gekennzeichnet, dass** das Arretierelement (64) über ein Zwischenelement (88) mit dem Stift (50) verbunden ist, und dass das Blockierelement (64) über den Anrissbereich (86) mit dem Zwischenelement (88) verbunden ist.
